# EUROPEAN PATENT APPLICATION

(11) **EP 4 617 402 A1**
(43) Date of publication of application: **17.09.2025**
(21) Application number: 24163029.2
(22) Date of filing: 12.03.2024
(51) Int. Cl.: C25B 1/04, C25B 9/05, C25B 9/75, C25B 9/77, C25B 15/021, C25B 15/023, C25B 15/027, C25B 15/08

(54) **METHOD FOR CONTROL OF THE INDIVIDUAL CATHOLYTE AND ANOLYTE FLOWS THROUGH A MULTITUDE OF ELECTROLYSER STACKS AND ELECTROLYSER SYSTEM COMPRISING A MULTITUDE OF INDIVIDUAL ELECTROLYSER STACKS**

(71) Applicant: Green Hydrogen Systems A/S, 6000 Kolding (DK)
(72) Inventor: RØNNE RASMUSSEN, Anders, 6000 Kolding (DK); SCHULTZ-FALK, Vickie, 6000 Kolding (DK); TVEDSKOV NIELSEN, Morten, 6000 Kolding (DK); GØBEL FÜCHTBAUER, Henrik, 6000 Kolding (DK)
(74) Representative: Guardian IP Consulting I/S

(57) **Abstract**

A method for control of the individual catholyte and anolyte flows through a multitude of electrolyser stacks is provided wherein:
a. each electrolyser stack (2) is adapted to perform electrolysis of water, and
b. all electrolyser stacks (2) are served with an electric current and that,
c. all electrolyser stacks (2) are served with anolyte flow (26), and
d. all electrolyser stacks (2) are served with catholyte flow (27).

It is preferred that
e. differential pressure signals (28.1) at each electrolyser stack (2) is provided and,
f. that catholyte control signals (43) and anolyte control signals (42) to each of a catholyte stack inflow valve actuator (44) and an anolyte stack inflow valve actuator (45) are provided for the regulation of each of an anolyte stack inflow valve (56) and a catholyte stack inflow valve (57).

An electrolyser system is also provided.

## Description

The present invention relates to a method for control of the individual catholyte and anolyte flows through a multitude of electrolyser stacks. The invention further relates to an electrolyser system comprising a multitude of individual electrolyser stacks.

### Background of the invention

In electrolyser systems, for the production of hydrogen and oxygen from water, and methods of their control a particular problem arises if a multitude of water electrolyser stacks (hereafter named stacks) are connected to common hydrogen and oxygen separator tanks. When more than one stack is connected to a separator set in an alkaline pressurised electrolyser plant, and shared electrolyte or lye pump/or pumps are used in the alkaline or electrolyte circuits, there is a need to ensure best possible flow conditions in each stack. Stacks in this connection are assemblies of cells each cell comprising a half-cell with an anode and a half-cell with a cathode and a diaphragm adapted to separate the content of the pair of half-cells. Individual half-cells are separated by so-named bipolar plates, which contacts an anode and a cathode on respective sides thereof in a pair of neighbouring half-cells. Manifolds are provided to ensure flow of catholyte into all cathode comprising half cells and a further manifold is adapted to collect an outflow of a mixture of product gas, in this case hydrogen and catholyte. Similar manifolds are provided for the supply of flows in/out of all anode comprising half-cells whereby product gas, in this case oxygen may be retrieved. The product gasses are separated from the anolyte and catholyte respectively in the mentioned separator unites. In pressurised stacks of the above kind, the cell stack customarily comprises a so-named cell frame for each half cell, which frames keep in place bipolar plates with accompanying electrodes and the diaphragms respectively, while the cell frames are pressed towards each other in each stack to also contain the fluids and gasses within the stack. In high pressure stacks it is preferred to arrange the manifolds stack-internal, while stack-external manifolds and flow channels for the supply of materials in/out of each half cell in a particular stack remains a second option.

### Summary of the invention

In a first aspect, objects of the invention are achieved by a method for control of the individual catholyte and anolyte flows through a multitude of electrolyser stacks is provided wherein each electrolyser stack is adapted to perform electrolysation of water to produce product gasses of hydrogen and oxygen, and all electrolyser stacks in the multitude of electrolyser stacks are served with an electric current and that, all electrolyser stacks are served with anolyte flow from an oxygen and anolyte separator unit through anolyte stack inflow pipes by means of an anolyte pump and all electrolyser stacks are served with catholyte flow from a hydrogen and catholyte separator unit through catholyte stack inflow pipes by means of a catholyte pump.

According to the invention differential pressure signals indicative of a pressure difference between pressures in two pressure regulated inflow pipes is provided at each electrolyser stack and catholyte stack inflow valve control signals and anolyte stack inflow valve control signals to each of a catholyte stack inflow valve actuator and an anolyte stack inflow valve actuator are provided for the regulation of each of an anolyte stack inflow valve and a catholyte stack inflow valve.

In the method, the flow through each electrolyser stack of anolyte and catholyte may be individually controlled, whereby a predetermined pressure difference between pressures inside the anolyte and catholyte pressure regulate inflow pipes in each of the electrolyser stacks may be maintained, such that in all of the electrolyser stacks the same or different pressure difference between the two electrolytes may be exactly controlled. It is noted that overall pressures in each of the separator units are maintained by bleeding product gases off at rates, which ensures predetermined pressure levels in the separator units. However, as the piping from each of the pumps to each stack differs between stacks and likewise the piping from the multitude of stacks to each of the separators will also vary from stack to stack, a precise pressure difference at each stack needs to be controlled in order to also accommodate flowrate induced pressure losses in the piping. In theory it is possible to arrange piping in a manner which ensures exactly the same pressure drop/increase between each stack and the separator units, however such piping will be arduous to provide and it would not leave open the possibility of regulating pressure differences and/or set different pressure differences at different electrolyser stacks, such differences between stack being required due to differences in electrolyser stack wear or environmental impact.

According to an embodiment of the invention, in an initial step a predetermined desired differential pressure between pressures in the two pressure regulated inflow pipes at each electrolyser stack is obtained leaving at least one of catholyte stack inflow valve or anolyte stack inflow valve at each electrolyser stack in a fully opened state.

It is desirous to have the highest possible flow through each stack, at least at startup of a brake-in phase for the multitude of electrolyser stacks, and when instigating a downward regulation of a flow, where each valve initially is in a fully opened state, at either the catholyte stack inflow valve or the anolyte stack inflow valve, it is always possible to regulate only one of the two valves to accomplish a desired differential pressure. And as initially, all inflow valves are regulated to their fully opened state, and the differential pressure signals are recuperated while running the electrolyser stacks, it can be determined which one of the catholyte stack inflow valve or the anolyte stack inflow valves at each electrolyser stack to regulate in a downward direction to restrict flow and pressure in the corresponding pressure regulated inflow pipe between the stack inflow valve and the electrolyser stack. The downward regulation of either the catholyte stack inflow valve or the anolyte stack inflow valve, while leaving an un-regulated valve in a fully opened state, will thus lead to the desired predetermined differential pressure while maintaining the highest possible flow rate through the corresponding electrolyser stack. In the present system, the differential pressure is desired, as the anolyte and catholyte flows are separated from each other, and thus a cross flow over the diaphragm is considered important in ensuring chemical stability of the electrolyser unit comprising the separators and accompanying multitude of stacks. In other electrolyser systems, the differential pressure requirement may be that the two inflow pressures are identical, and that no differential pressure is at hand. Whatever the chosen, or necessary value for differential pressure may be, this will easily be accomplished with the disclosed system.

In an embodiment of the invention the catholyte pump in a catholyte fluid flow circuit and the anolyte pump in an anolyte fluid flow circuit receive catholyte and anolyte fluids from the respective gas separator units and serves the fluids through stack external manifolds at the respective catholyte and anolyte stack inflow valves at each stack, and further, heat exchangers are arranged in the fluid flow between the separator units and the stack external catholyte manifold and the stack external anolyte manifold respectively, whereby further cooling flows supplied to the heat exchangers are regulated to thereby secure that none of catholyte and hydrogen outflow temperature signal and anolyte and oxygen outflow temperature signal from any of the electrolyser stacks surpasses a predetermined outflow temperature signal during electrolysation.

Pumps are preferably provided on the fluid output side of separator units, as here there will be no or only small amounts of gas bubbles in the electrolytes. And further, it is preferred that heat exchanges are provided upstream or downstream from the pumps, and preferably in the flow pipes between the separator units and the stack external manifolds for anolyte and catholyte. The stack external manifolds direct the electrolyte streams from the two pumps to the individual electrolyser stacks. In this way it is ensured, that the inflow temperature to each stack is directly dependent on the cooling delivered to the anolyte and catholyte flows in the heat exchangers. This is possible even with varying electrolyte temperature at the input side of the exchanges, whereby these units are regulated by adjusting the flow and/or temperature of a cooling liquid through the heat exchanger cooling circuit side. This regulation of a cooling liquid flow and/or temperature served at the heat exchangers is guided by temperature measurements performed in both of the gas/liquid mixtures leaving each electrolyser stack. During electrolysation, a certain amount of excess heat will be added to the media flows in each stack, and this may lead to overheating of certain stack parts, notably the diaphragm, and such overheating is to be avoided.

The regulation of temperature and/or flow of cooling medium flow to the heat exchangers shall therefore be regulated such that none of the measured temperatures of electrolyser media which leaves the multitude of electrolyser stacks surpasses a predetermined temperature. Usually, a temperature well below highest allowable temperature in the diaphragm is chosen, however for limited periods of time either a somewhat higher temperature may be chosen, or a somewhat lower temperature may be chosen at all or at most times, to either increase hydrogen production or ensure longevity of the electrolyser stacks respectively. It is preferred that the temperature is obtained directly in the outflow media from each stack, and thus thermo-sensing devices of the insertion type with low time-constants and high resolution is preferred, even if this necessitates line-brakes for the insertion of a catholyte and hydrogen outflow temperature sensor and the insertion of an anolyte and oxygen outflow temperature sensor respectively proximal to a stack interconnection end endplate. Other types of thermo-sensing devices such as thermo-couples, which are embedded in one or more single half-cells of each of the multitude of electrolyser stacks may alternatively or additionally serve as sensing devices and provide a secure and stable indicator of outflow temperatures from the electrolyser stacks.

In an embodiment, a further regulation step is performed in that predefined temperature signals from the catholyte and hydrogen outflow temperature sensor and anolyte and oxygen outflow temperature sensor from all of the electrolyser stacks are obtained by adjusting the catholyte stack inflow valve and the anolyte stack inflow valve in tandem at the electrolyser stacks.

In the previously described regulation step regarding control of the cooling in the heat exchangers, only the overall temperature of inflow media, which is common to all stacks, is affected, and all stacks have at least one of the inflow regulator valves fully open. In this situation it is in principle possible that all of the electrolyser stacks deliver outflow media temperatures during electrolysation, which are identical. However, it is more likely that at least one stack will deliver outflow media at a temperature below the predetermined temperature which no outflow from any stack shall surpass, given the described regulation of the two heat exchangers. Any such stack delivering outflows at a lower temperature than the temperature set as an upper limit, will thus also perform at a lower production performance in terms of delivered hydrogen units per supplied electric current effect as this performance unit rises steeply with rising temperature.

To improve the performance of such a stack, it is suggested to decrease inflow rates of the anolyte and catholyte flows simultaneously, and to do so without essentially changing the initially set differential pressure between the pressures in the pressure regulated inflow pipes. This is done by a closing action of the catholyte stack inflow valve and the anolyte stack inflow valves together, or in tandem, while maintaining the still desired pressure difference between the pressures in the pressure regulated inflow pipes to the electrolyser stack. Any such decreases of inflow rates are performed while the outflow temperature signals are monitored such that the regulation may stop once a desired temperature for the outflow media from each electrolyser stack is reached.

This action is preferably undertaken in a slow pace, compared to the regulation speed of the cooling effect imparted to the anolyte and catholyte by the respective heat exchangers. Thereby it is ensured that the outflow temperatures of any electrolyser stack is increased as much as possible, while the differential pressures between pressures in anolyte and catholyte inflow pipes remain within pre-prescribed limits. It would be possible to regulate inflow temperatures of anolyte and catholyte in many different ways, such as by having a cooler or heat exchanger arranged on the inflow pipes of each stack, however this would not ensure the simultaneously desired differential pressure regulation option. By way of the invented method, pressure differences between the inflows of each stack may be precisely maintained, and at the same time a scheme for maximising outflow temperatures in order to achieve best possible performance on each stack in the multitude of stacks is available.

It would naturally be possible alternatively or additionally to regulate current supply to each stack to ensure a uniform temperature increase over all stacks in a row of stacks feeding into one and the same separator pair. However, when high currents are demanded as is the case with electrolyser stacks of some size, such current regulation means are both arduous and expensive. Further, the increase of current to an electrolyser stack may increase output temperature, however at the expense of productivity in terms of amount of hydrogen produced per unit electric power consumed, and other forms of regulation are thus preferred.

In an embodiment, the electrolyte flows are piped through stack external manifolds to a series of individual stacks, such as between 2 and 20 individual stacks, more preferred between 4 and 12 individual stacks, and most preferred to 6 individual stacks.

In theory, there is no upper limit to the number of stacks, which may be served by a single pair of separator units however, electrolyser stack external manifolds become more arduous to produce as the number of electrolyser stacks rise, and it is thus preferred to limit the number of stacks to no more than 20 stacks, and most preferred 6 stacks are used.

When a stack assembly is started up, usually all stack inflow valves are turned up to maximize flow through each stack, and then the heat exchangers are regulated to supply an electrolyte inflow temperature which ensures that no single outflow of the multitude of electrolyte outflows from the stacks surpasses a predefined maximum temperature. In other words, the inflow temperatures are regulated by way of the heat exchangers such that the highest allowable temperature of at least one stack is reached. This one (or more) stack will thus work at its/their highest possible performance given that performance or efficiency of a stack is highly temperature dependent and rises with rising temperature. Any other stack of the multitude of stacks will work below its or their highest possible temperature and thereby efficiency. Increase in efficiency of such stacks is thus obtainable by limiting the input flows to such stacks individually as explained above, however the increase of the number of electrolyser stacks also increases the complexity of regulation algorithms, and such increased complexity may ultimately infringe the ability to regulate the stacks within boarders of stability and a stable system is possible with no more than 6 individual electrolyser stacks.

In a second aspect, the objects of the invention are achieved by an electrolyser system comprising a multitude of individual electrolyser stacks. The system is preferably configured for carrying out the method as exemplified in relation to the first aspect described above. Further, the method according to the embodiments of the first aspect, and a exemplified above, may be applied in the system according to the various embodiments exemplified in the following.

In a further embodiment a system comprising a range/ multitude of individual electrolyser stacks is provided wherein each electrolyser stack is adapted to perform electrolysation of water in order to produce hydrogen and oxygen, and all of the electrolyser stacks in the multitude of electrolysers stacks are connected to a DC electric current supply and further one anolyte and one oxygen separator unit and accompanying pumps are provided along with anolyte flows and piping connected to each electrolyser stack to ensure anolyte flow from the anolyte and oxygen separator unit to each electrolyser stack and to ensure a combined anolyte and oxygen flow from each electrolyser stack to the oxygen separator unit and further, one catholyte and hydrogen separator unit and accompanying pump are provided along with catholyte flows and piping adapted to ensure catholyte flow from the catholyte and hydrogen separator unit to each electrolyser stack and adapted to ensure a combined catholyte and hydrogen flow from each electrolyser stack to the catholyte and hydrogen separator unit.

In an electrolyser system of the above kind, it may be required to maintain a pressure difference, possibly a zero or non-zero pressure difference between the anolyte and catholyte inflow pressures to each stack, and preferably such pressure differences should be maintained constant even when other parameters, such as flow rate into and out of the stacks varies.

Accordingly, differential pressure sensors are provided and adapted to provide a pressure differential signal indicative of the pressure difference between pressures in two pressure regulated inflow pipes at each electrolyser stack and further, catholyte stack inflow valve control signals and anolyte stack inflow valve control signals to each of a catholyte stack inflow valve actuator and an anolyte stack inflow valve actuator are provided based on the obtained pressure differential signal for the regulation of each of an anolyte stack inflow valve and a catholyte stack inflow valve.

With the electrolyser system, it becomes possible to maintain inlet pressures for catholyte and anolyte at the same or at different levels, while other parameters, such as flow through the individual stack, and thus temperatures of output media vary from an electrolyser stack to the next. This is possible even if only one pump for each of the anolyte and catholyte is used.

As explained below, water is continuously generated at one side of the diaphragms in the cells, while being consumed at the opposed side. This will eventually lead to an excess of water in the one of the two electrolyte fluid flow-circuits of an electrolyser system of the disclosed kind. To ensure durable electrolyte volume balance on the two sides of the multitude of diaphragms in an electrolyser system comprising a multitude of individual electrolyser stacks, the differential pressures between the two electrolyte input flows is measured at each electrolyser stack. Preferably the differential pressure between the fluid pressure in the inflow pipes is measured between the interconnection end endplate and respective electrolyte stack inflow valves provided in each inflow pipe. This allows for possible fine tuning of the inflow pressures in each electrolyser stack and thus pressure differences arising from differences in piping two and from the individual electrolyser stacks may be countered. Hereby it becomes possible to maintain a fine, but sustained pressure difference and thus a well-defined cross diaphragm fluid flow during electrolysation. In some instances, it is desired to maintain a zero pressure difference and keep cross diaphragm flows at a minimum.

In an embodiment, the catholyte stack inflow valve control signals and anolyte stack inflow valve control signals are adapted to ensure a predetermined pressure difference between the pressures in the two pressure regulated inflow pipes for all stacks while leaving at least one of catholyte stack inflow valve or anolyte stack inflow valve at each electrolyser stack in a fully opened state.

When a differential pressure in the two inflow pipes is desired, and it is further desired that this differential pressure is not a zero value, at least one of the catholyte stack inflow valve or the anolyte stack inflow valve most likely needs to be regulated, and as initially they are both in a fully opened state, only a regulation in the direction of restricting the flow through the valve is possible. In this situation, it is preferable to regulate only one of the two valves to thereby gain the desired differential pressure in the pressure regulated inflow pipes at all stacks. Leaving one of the valves in its original fully opened state will ensure, that the highest possible flow through the stack with the available pumps is ensured. In this initial step, it will in most cases be advantageous to install the same pressure difference in the pressure regulated inflow pipes at all of the multitude of electrolyser stacks. The anolyte stack inflow valve and the catholyte inflow valve must be provided between the stack external manifolds and the measuring point where the differential pressure measuring device is provided and connected to the inflow pipes to each stack.

In a further embodiment heat exchangers are arranged in the fluid flow between the separator units and the stack inflow valves, whereby further cooling flows supplied to the heat exchangers are adapted to be regulated to thereby secure that none of a catholyte and hydrogen outflow temperature signal and an anolyte and oxygen outflow temperature signal from any of the electrolyser stacks surpasses a predetermined maximum outflow temperature signal during electrolysation.

The cooling flow through the heat exchangers will secure integrity of the system, by ensuring that none of the temperatures of the two outflows from each electrolyser stacks as measured, surpasses a predetermined value.

In an embodiment a thermosensitive element at each outflow pipe at each electrolyser stack is provided and adapted to provide catholyte and hydrogen outflow temperature signal and anolyte and oxygen outflow temperature signal indicative of temperatures of the outflow material streams from each electrolyser stack and further, at each of catholyte pressure regulated inflow pipe and anolyte pressure regulate inflow pipe the catholyte stack inflow valve and the anolyte stack inflow valves are arranged and adapted to regulate the flow rate through the corresponding electrolyser stack, and that the valves are adapted to ensure predetermined temperatures of the outflow material streams from each stack during electrolysation while maintaining the predefined differential pressure.

In the embodiment, the predetermined temperatures are ensured by restricting the flows through any of the electrolyser stacks, which stack in the initial step has at least one of the catholyte or anolyte inflow valves in a fully opened state. This comes by, as initially the cooling of the electrolytes flowing into the stacks through the heat exchangers is arranged to ensure, that all stacks deliver outflows having temperatures below a given maximum value, and any stack which deviates in the temperature of its output stream must thus have a lower temperature than the set maximum value. The way to increase the temperature for the output streams of such a stack is to restrict the flow through this electrolyser stack, allowing the media to heat up more, as the restricted flow results in a longer time spent by the electrolytes in the anode and cathode chambers of each cell in the electrolyser stack. The restriction of flow shall take place in tandem for the two inflows: the anolyte and the catholyte such that any differential pressure between the two media in the stack remains un-affected by the regulation of the flow to the electrolyser stack in question.

In an embodiment of the invention between 2 and 20 stacks are provided, more preferred between 2 and 12 stacks and most preferred that 6 electrolyser stacks are provided.

Long ranges of stacks such as 20 or more electrolyser stacks will demand similarly large stack external manifolds and may not contribute to performance and also automated regulation algorithms must comply with certain stability criteria, and this becomes an increasing challenge as the number of electrolyser stacks grows and thus a count of 6 electrolyser stacks is preferred.

In an embodiment, the pump in a catholyte fluid flow circuit and the pump in an anolyte fluid flow circuit are each inserted in the exit line from respective separator units upstream of the range of electrolyser stacks, and further, the anolyte and catholyte pumps are connected downstream of respective heat exchanges and also electrolyte outflow channels from the pumps are connected to anolyte and catholyte electrolyser stack inflow pipes respectively at each electrolyser stack.

It is advantageous to have the pumps downstream of the separation unit, and prior to the electrolyser stacks, as thus any sensitivity to gas bubbles in the pumped fluid, will not affect the pumps, as on the outlet side of the separation units, only minute amounts of gas bubbles will be present.

In a further embodiment, an actuator is provided at each electrolyser stack inflow valve member and adapted for control of the opening degree of respective electrolyser stack inflow valve members, and further, a calculation and control unit is provided and adapted to deliver catholyte electrolyser stack inflow valve control signals and anolyte electrolyser stack inflow valve controls signals to the actuators based on obtained temperature signals from temperature sensors arranged at each electrolyser stack outflow pipe.

With these measures, the flows and pressure differences between the two inflows at each stack becomes automatically controllable, an a very stable system is obtainable even with a larger multitude of stacks, such as up to 20 stacks.

Various exemplifying and non-limiting embodiments both as to constructions and to methods of operation, together with additional objects and advantages thereof, will be best understood from the following description of specific exemplifying and non-limiting embodiments when read in conjunction with the accompanying drawings.

It should be emphasized that the term "comprises/comprising/comprised of" when used in this specification is taken to specify the presence of stated features, integers, steps or components but does not preclude the presence or addition of one or more other features, integers, steps, components or groups thereof.

### Brief description of the drawings

In the following, the invention will be described in greater detail with reference to embodiments shown by the enclosed figures. It should be emphasized that the embodiments shown are used for example purposes only and should not be used to limit the scope of the invention.
Fig. 1 is a schematic representation of an electrolyser system according to the invention,
Fig. 2 shows a single stack (2) with in- and output flows,
Fig. 3 shows a single sell and its basic components and connections to separator units,
Fig. 4 is a schematic representation of one of the two electrolyte flows always passing between stacks and separator units,
Fig. 5 is a 3D sectional view of a front part of a stack, with in- and outflow pipes,
Fig. 6 shows a close sectional view of a catholyte pressure regulated inflow pipe and fluid pressure pipe 39 connection,
Fig. 7 is likewise a sectional view of an anolyte pressure regulated inflow pipe and the fluid pressure pipe 38 connection, and
Fig. 8 is a view from above of a single electrolyser stack with inflow piping.

### Detailed description of the embodiments

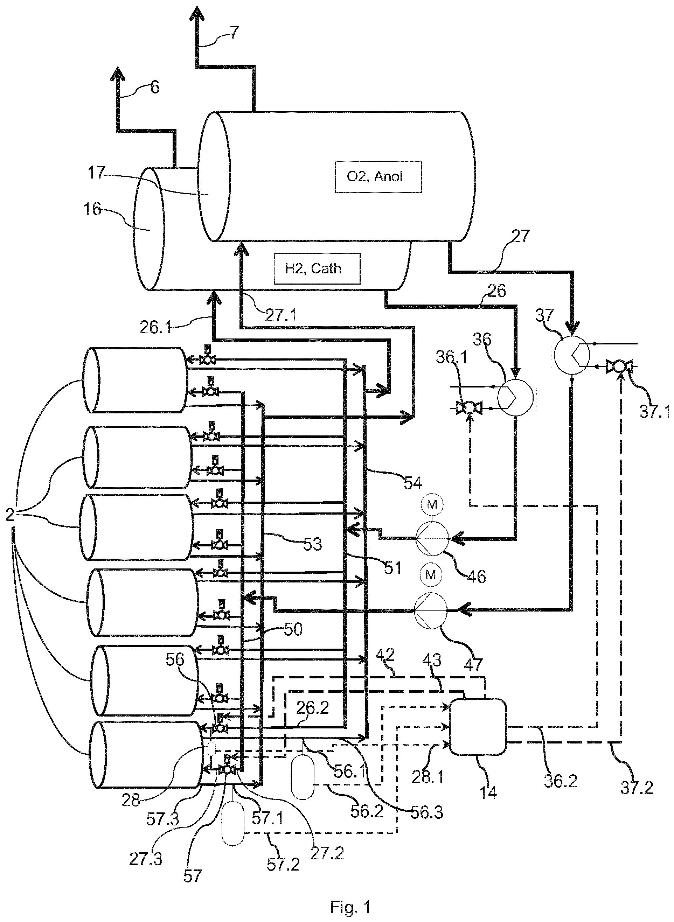

In Fig. 1 the two separator units 16, 17 are schematically represented as gravitational separator tanks, however other kinds of separator units such as cyclonic separators could be used, possibly in combination with the gravitational separators. From the catholyte and hydrogen separator unit 16 a hydrogen exhaust 6 to a hydrogen recipient is provided, and similarly, from the anolyte and oxygen separator unit 17 an oxygen exhaust 7 to an oxygen recipient is provided. The recipients of the produced gasses are not further described here but may comprise dryer and cleaning units for the gases and tanks and/or pipes for leading the gasses to users thereof placed distanced from the electrolyser unit.

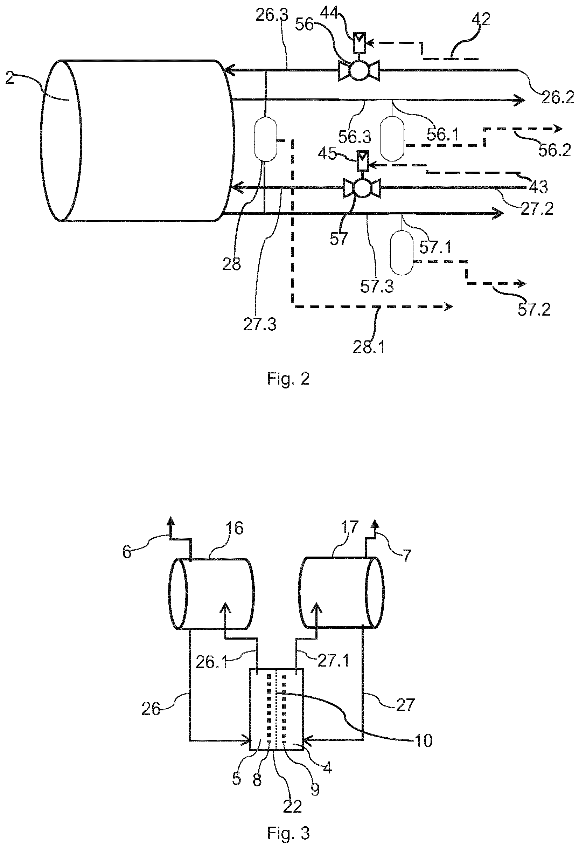

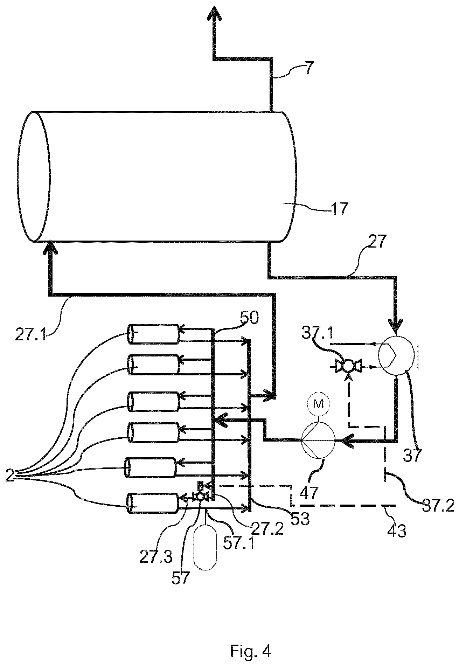

From the anolyte and oxygen separation tank 17, an anolyte flow 27 is indicated, which is piped through an anolyte heat exchanger 37, where the flow is cooled down to a predetermined temperature, commensurate with a desired inflow temperature for the stacks 2 electrolyte streams delivered to the stacks. From the heat exchanger 37, the flow enters an anolyte pump 47, and from the pump the anolyte flow 27 is entered a stack external anolyte manifold 50 (also seen in Fig. 4). In the exact same way, a catholyte flow 26 is indicated from the catholyte and hydrogen separation tank 16 and piped through a heat exchanger 36, and further through a pump 46 and then into a stack external catholyte manifold 51. From each of stack external catholyte and anolyte manifolds, pipes 26.2; 27.2 are provided which feeds anolyte and catholyte respectively to each electrolyser stack 2. In Fig. 1 the reference signs for the catholyte stack inflow pipe 26.2 and the anolyte stack inflow pipe 27.2 are indicated only at the lowermost electrolyser stack 2. These reference signs are repeated in Fig. 2, where the lowermost electrolyser stack 2 is shown alone.

As indicated in Fig. 1, each pump 46; 47 supplies all of the electrolyser stacks 2. Each stack inflow pipe 26.2; 27.2 is provided with a catholyte and anolyte stack inflow valve 56; 57 respectively, such that the inflow of anolyte and catholyte to each stack 2 may be individually regulated. The pipes between the stack inflow valve 56; 57 and an interconnection endplate 48 are termed catholyte pressure regulated inflow pipe 26.3 and anolyte pressure regulated inflow pipe 27.3 respectively.

Inside of each electrolyser stack 2, a range of single cells 22 are stacked next to each other, and in Fig. 3 one such cell 22 is schematically disclosed. Each cell 22 is divided into an anode chamber 4 and a cathode chamber 5, parted from each other by a diaphragm 10. The diaphragm 10 allows passage of ions and/or electric current between the two half chambers 4,5, but bars gas bubbles formed at the two electrodes from passing through the diaphragm from one half-cells to an adjacent half-cell. In the anode chamber 4 an anode 9 shall be placed, while a cathode 8 shall reside in the cathode chamber 5. When electrically charged, oxygen bubbles shall be formed at and released from the surface of the anode 9, and hydrogen bubbles shall form at and be released from the surface of the cathode 8, and the two gasses shall remain at the side of the diaphragm 10 where they are produced. The hydrogen formed at the cathode 8 shall pass out of the cell via a catholyte and hydrogen flow 26.1 and be piped into the catholyte and hydrogen gas separation unit 16 as indicated in Fig. 3. Similarly, the oxygen formed at the anode 9 shall pass out of the cell via anolyte and oxygen flow 27.1 and be piped into the catholyte and oxygen separation unit 17. Inside of each electrolyser stack 2, there are stack internal manifolds which directs anolyte inflow 27 and catholyte inflow 26 to the individual cells and collects the catholyte and hydrogen gas mixture as well as the anolyte and oxygen gas mixtures from each cell 10 and provides the two outflows from each stack, as is well known in the art.

In Fig. 2 and Fig. 1 a catholyte and hydrogen stack outflow pipe 56.3 an anolyte and oxygen stack outflow pipe 57.3 are indicated. The catholyte and hydrogen stack outflow pipe 56.3 joins a stack external catholyte and hydrogen manifold 54, which combines the hydrogen outflows from all stacks into a joint hydrogen and catholyte flow 26.1 which is entered into the separator unit 16. The anolyte and oxygen stack outflow pipe 57.3 joins a stack external anolyte and oxygen manifold 53 (seen in Fig. 1 and Fig. 4), which collects and joins the anolyte outflows from all stacks 2 into a joint oxygen and anolyte flow 27.1, which is entered the anolyte and oxygen separator unit 17.

As seen in Fig. 1, an array of 6 individual electrolyser stacks 2 is shown, however a larger or smaller multitude of stacks arranged in horizontal and/or vertical arrays of electrolyser stacks could be provided and connected to common separator units 16; 17.

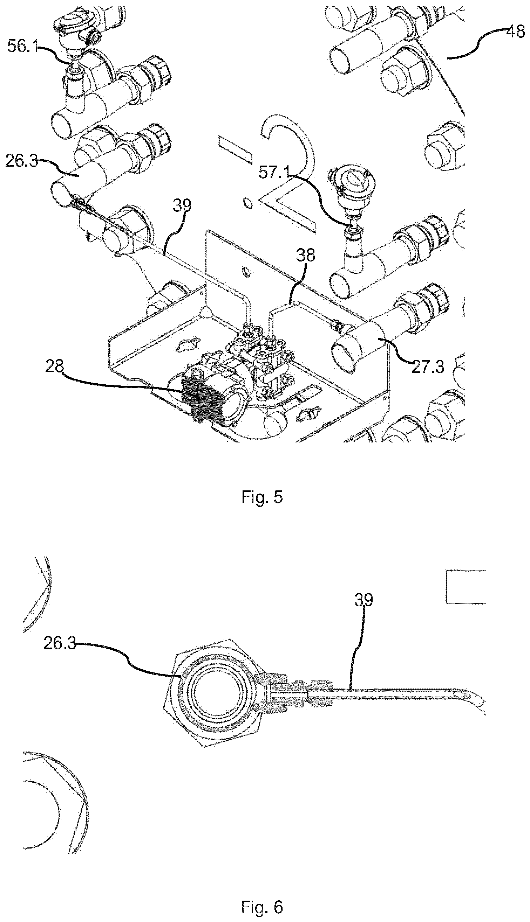

In Fig. 2 and Fig. 1 catholyte and hydrogen outflow temperature sensor 56.1 and anolyte and oxygen outflow temperature sensor 57.1 are schematically indicated and the respective temperature signals 56.2; 57.2 dispatched from the sensors are indicated. In Fig. 1 it is further disclosed how respective temperature signals 56.2; 57.2 are served at a calculation and control unit 14. Such signals are retrieved from temperature sensors at each stack outflow pipe 56.3; 57.3 even if only indicated for the lowermost stack in Fig. 1 and Fig. 4. In Fig. 5, an example of actual temperature sensors 56.1; 57.1 and as seen, they are of the insertion type to ensure both a low time-lag and a fine resolution in the temperature measurement.

Further, the outflow temperature sensors 57.1; 56.1 and signals therefrom 56.2; 57.2 are used to provide the guiding signals 42; 43 from the calculation and control unit 14, which is further adapted to calculate and dispatch a catholyte stack inflow valve control signal 42 and an anolyte stack inflow valve control signal 43 to the catholyte stack inflow valve actuator 44 and the anolyte stack inflow valve actuator 45 respectively. Based on these signals the actuators 44; 45 may adjust the inflow through the anolyte stack inflow valve 57 and the catholyte stack inflow valve 56 of catholyte and anolyte respectively into the corresponding stack. This arrangement of sensors, valves and the calculation unit connections are repeated on each stack 2 even if it is only shown on the lowermost stack in Fig. 1 however, preferably only one calculator and control unit 14 shall be provided.

The control unit 14 further calculate catholyte cooling flow regulator signal 36.2 and anolyte cooling flow regulator signal 37.2 which are served at regulators 36.1; 37.1 adapted to control cooling flow through the heat exchangers 36; 37. The regulators or valves 36.1; 37.1 are shown at the inflow sides of a cooling flow but the temperature regulation may work in any other known way, such as by changing the temperature of the cooling fluid or regulating the speed of cooling fluid pumps (not shown in the drawing).

The control unit 14 is preferably adapted to initially leave all inflow valves 56; 57 at all stacks 2 fully open and provide just sufficient cooling to the heat exchanges to ensure, that none of registered outflow temperature signals 56.2; 57.2 surpasses a predetermined maximum value. In this way, it is ensured that none of the stacks 2 will be operated at too high a temperature. During any further fine-tuning of the inflow valves 56;57 as disclosed below, the cooling regulation shall remain active, and constantly ensure that none of the registered outflow temperature signals surpasses the predetermined maximum value.

In Fig. 4 only the anolyte fluid flow circuit is disclosed and it is easy to follow the anolyte flow line 27 out of the anolyte and oxygen separator 17, through the anolyte heat exchanger 37, further through the anolyte pump 47 and into the stack external anolyte manifold 50 and into each stack through each of a range of anolyte stack inflow regulator valves 57 (only one such valve is represented in the figure). From each stack 2 the now oxygen enriched anolyte flow passes an anolyte and oxygen outflow temperature sensor 57.1 and into the stack external anolyte and oxygen manifold 53 collecting the anolyte and oxygen outflows from each of the stack. Again, only one anolyte temperature sensor 57.1 is disclosed in Fig. 4, however each of the anolyte and oxygen outflow pipes from the stacks 2 will be equipped with such a sensor, and an accompanying anolyte and oxygen outflow temperature signal will feed from each such sensor and into the calculation and control unit 14 (not shown in Fig. 4). The stack external anolyte and oxygen manifold 53 feeds the anolyte and oxygen gas flow 27.1 into the separator 17. From the separator, the oxygen gas is piped further on as known in the art to such devises as a gas cleaning, and possibly gas conditioning unit and through a gas pressure regulator and towards a recipient of the produced oxygen, which in many cases may well be the atmosphere.

In a manual override mode, the settings of each of inflow valves 56; 57 at each electrolyser stack 2 are manually controlled during a brake-in period of an electrolyser system. This mode may be maintained throughout the life of a system, provided that external influences such as whether fluctuations and day/night differences in heat radiation away from individual electrolyser stacks is sufficiently controlled via the automatically controlled heat exchangers 36; 37. Otherwise the automated regulation of individual electrolyser stack outflow temperatures is performed by the calculation and control unit 14.

In Fig. 2 and Fig. 1, a pressure differential sensor 28 is shown. This pressure differential sensor 28 serves a differential pressure signal 28.1 to the calculation and control unit 14 commensurate with any pressure difference between pressures in the pressure regulated catholyte inflow pipe 26.3 and the pressure regulated anolyte inflow pipe 27.3.

The pressure regulated pipes 26.3; 27.3 are the piping between the electrolyser stack 2 and the catholyte stack inflow valve 56 and anolyte stack inflow valve 57 respectively. It is desired to keep a predefined pressure difference between pressures in the two inflow pipes 26.3; 27.3.

The alignment of the pressure differences over the stacks is done prior to any regulation on variance between stack output temperatures and it is done leaving one of the two stack inflow valves 56; 57 fully open at each electrolyser stack 2. If later, a need to increase the outflow temperature of a particular stack is registered, to achieve performance at maximum temperature, this is done by restricting the two inflows to the stack in tandem, meaning that both of catholyte stack inflow valve 56 and anolyte stack valve 57 are regulated to restrict inflow rates at equal measures, such that any differential pressure regulation performed initially remains uninfluenced by the restricted inflow rate to the particular electrolyser stack.

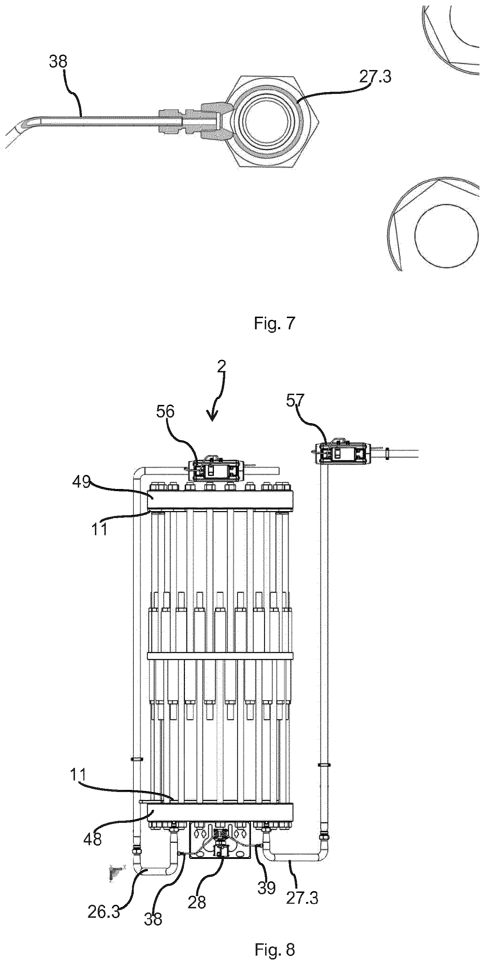

In Fig. 5 the pressure differential sensor 28 is shown in its position for use at an interconnection endplate 48 of a given stack 2. Measuring pipes, namely an anolyte fluid pressure pipe 38 and a catholyte fluid pressure pipe 39 are shown in Figs. 6,7 and Fig. 8, and these pipes 38; 39 are instrumental in ensuring that the pressures residing in the two inflow pipes 26.3; 27.3 are served un-distorted at the measuring device 28. In order to avoid gas bubbles, which might disturb the measurement, the two fluid pressure pipes 38; 39 are arranged without formation of gas traps and as shown in Figs. 6 and 7, the sectional views also indicates, that the conduits connecting the inner volumes of the fluid pressure pipes 38; 39 with the inner volumes of the respective inflow pipes 26.3; 27,3 are shaped to avoid the formation of any gas traps. For the same reason the measuring devices 28 are arranged at a lover vertical level than the fluid pressure access point at the inflow pipes 26.3; 27.3.

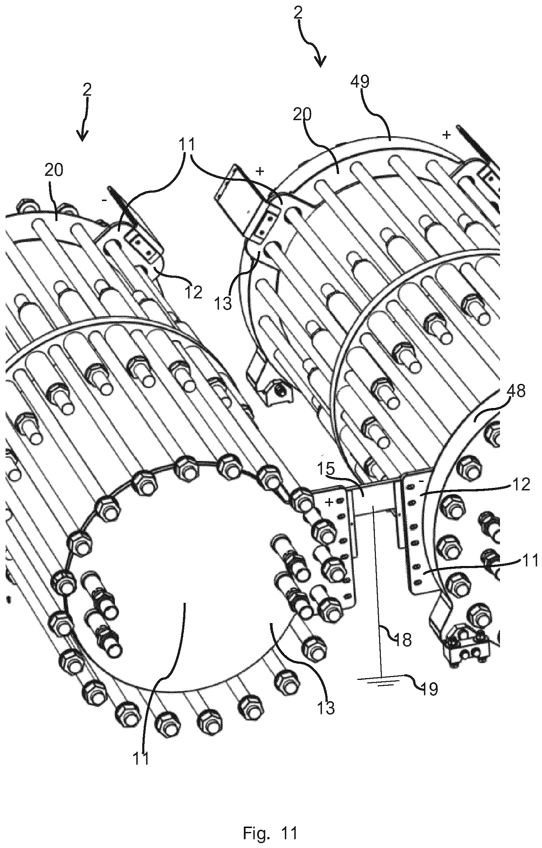

As seen in Fig. 8, the connection between the fluid pressure pipes 38; 39 and respective electrolyte fluid inflow pipe 26.3; 27.3 are provided right next to the interconnection endplate 48. The two electric current injectors/collectors 11 best seen in Fig. 11 placed at the interconnection end endplate 48 are interconnected by the sturdy electric electrolyser stack interconnector 15. The sturdy electric interconnector 15 is adapted to carry a high electric current and at the same time ensure that there will be virtually no electrical potential difference between the electric current injectors/collectors 11 placed at the interconnection end endplates 48, and further, the interconnection end endplates 48 will be at approximately the same potential, and as seen in Fig. 11, an earth or ground connection 18 is provided which connects the sturdy electric electrolyser stack interconnector 15 to ground 19. Due to the electrical conductivity of the electrolyte, this also will work as a ground connector for the interconnection end endplate 48.

The overall reaction of water electrolysis is:

H₂O(l) → H₂(g) + 1/2O₂(g) (3)

The cathodic hydrogen evolution reaction in alkaline electrolytes is:
(-):

   2H₂O(l) + 2e⁻ → H₂(g) + 2OH⁻ (aq) (1)

The anodic oxygen evolution reaction in alkaline electrolytes is:
(+):

   2OH⁻ (aq) → 1/2O₂(g) + H₂O(l) + 2e- (2)

The reaction product H₂ at the cathode (1) is initially dissolved in the catholyte, but will then, nearly instantly form bubbles due to low solubility of hydrogen in the catholyte. The OH- reaction product also produced at the cathode side (1) and the consumption of four OH- ions at the anode side (2) for each molecule of O₂ being produced (= consumption of two OH- ions for each atom of O₂ being produced) will theoretically result in an imbalance in OH- ion concentration in the two fluids on each their side of the diaphragm, and a natural cross diaphragm transport of OH- ions from the cathode to the anode side of the diaphragm is considered likely to compensate for this imbalance. The oxygen atoms will nearly instantly form O₂ molecules and leave the fluid phase of the anolyte and form bubbles of oxygen. The formed water molecule will reside as surplus liquid in the anolyte at the anode side (2).

At the cathode water is consumed, while at the anode some water is generated or produced. It is further speculated that some water molecules are likely to adhere to the OH- ions during passage through the diaphragm leading to an even higher rate of water accumulation at the anode.

And from (3) transpires that water is also continuously consumed as expected and the water thereby turned into the two gasses H₂ and O₂ needs to be added to the system.

In some alkaline electrolyser systems, the two electrolytes are mixed at various degrees between the separators 16, 17 and the stacks 2, and water may also be added here in order to compensate for water consumed by electrolyses. In the present system, the two electrolytes are not mixed outside of the cells, and water is added to the cathodic flow circuit, both as water coming from outside of the system, and as water pressured through the diaphragms from the anodic chambers to the cathodic chambers.

This is accomplished by bleeding off hydrogen and oxygen from the two separators 16, 17 at a rate which keeps the pressure in the anodic/oxygen separator 17 marginally higher than the pressure in the hydrogen separator 16. And in order to ensure that any pressure drops from the pumps to the various stacks, and also differences in pressure drops from the stacks to the separators 16; 17 which may both vary slightly due to variations in the piping lengths and diameters to/from the stacks, does not compromise the pressure difference needed at the inflow level of each stack 2, the inflow valves 56; 57 may be regulated according to a pressure differential signal 28.1 obtained by a pressure differential sensor provided at each stack.

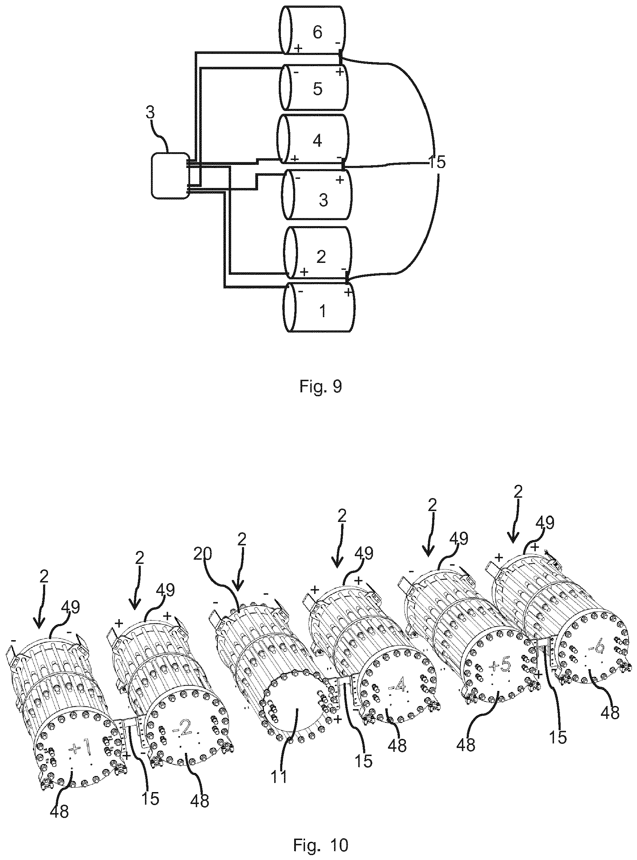

A DC current supply 3 is schematically shown in Fig. 9. The current supply 3 delivers current to the back end or high potential ends of the stacks, and the front end or interconnection end, where the supply pipes are connected to the stacks, the stacks are electrically interconnected in pairs, and at this interconnection point the stacks are connected to ground 19 (see Fig. 11). This allows for a power supply with a high potential difference between high and low potential (relative to ground or zero potential) connection points at the high potential end endplate 49 at adjacent electrolyser stacks which is very high without having to cope with overly long electrolyser stacks.

In Fig. 8 stack current collectors/injectors 11 are visible at each interconnection end endplate 48 and each high potential end endplate 49, and it is to these collectors/injectors 11 which the current supply 3 feeds the current at high and low potential at respective adjacent electrolyser stacks 2. The electric current collectors/injectors are provided at each endplate 48; 49 and connects to an anodic or a cathodic chamber of a cell. Electric current will travel through the range of cells stacked between the current injectors/collectors 11 of each electrolyser stack 2 and propagate as electrons in bipolar plates (not shown) which interconnects the cathodes and anodes in adjacent cells and through the diaphragm 10 in each cell as OH- ions and/or electrons. The diaphragms, which are basically somewhat thick screens 10 will be full of anolyte and/or catholyte to allow the passage of the ions and/or electrons.

A special feature of Figs. 9 and Fig. 10 is that the third stack in the row of electrolyser stacks 2 shown in Fig. 9 and displayed in an enlarged view in Fig. 10, is shown without the interconnection end endplate 48 and the high potential end endplate 49. The electric current collector 13 is in view in Fig. 11, where the insulation plate 20 is not shown which would otherwise sit between the current collector 13 and the interconnection end endplate 48. The electrical insulation plate 20 between electric current collectors/ injectors 11 and corresponding high potential end endplate 49 is seen at the opposed end of the electrolyser stack 2.

The current collector 13 will have the same potential, namely a zero or ground potential, as the current injector 12 to which it is electrically connected via sturdy electric stack-interconnector 15. At the high potential end at the high potential end endplate 49, the corresponding high potential current injector 12 and current collector 13 are arranged, and as shown in Fig. 9, they are connected to a current supply 3 to complete the electric circuit in which the two electrolyser stacks 2 in Fig. 11 sits. For the sake of good order, it is also mentioned that between both of interconnection end endplate 48 and high potential end endplate 49 and corresponding current collectors/injectors 11 an electrically insulating plate 20 (barely visible) is provided.

It is to be noted that the figures and the above description have shown the example embodiments in a simple and schematic manner. Many of the specific mechanical details have not been shown since the person skilled in the art should be familiar with these details and they would just unnecessarily complicate this description.

### List of parts

2 Electrolyser stacks
3 DC current supply
4 Anode chamber
5 Cathode chamber
6 Hydrogen exhaust to recipient
7 Oxygen exhaust to recipient
8 Cathode
9 Anode
10 Diaphragm
11 Electric current injectors/ collectors
12 Electric current injector
13 Electric current collector
14 Calculation and control unit
15 Sturdy electric stack-interconnector
16 Catholyte and hydrogen separator unit
17 Anolyte and oxygen separator unit
18 Ground connection
19 Ground
20 Electrical insulation plate
22 Single sell
26 Catholyte flows and piping
26.1 Catholyte and Hydrogen gas flow
26.2 Catholyte stack inflow pipe
26.3. Catholyte pressure regulated inflow pipe
27 Anolyte flows and piping
27.1 Anolyte and Oxygen gas flow
27. 2 Anolyte stack inflow pipe
27.3. Anolyte pressure regulated inflow pipe
28 Pressure differential sensor
   28.1 Pressure differential signal
36 Catholyte heat exchanger
   36.1 cooling flow regulator for catholyte heat exchanger
   36.2 catholyte cooling flow regulator signal
37 Anolyte heat exchanger
   37.1 cooling flow regulator for anolyte heat exchanger
   37.2 anolyte cooling flow regulator signal
38 Anolyte fluid pressure pipe
39 Catholyte fluid pressure pipe
42 Catholyte stack inflow valve control signal
43 Anolyte stack inflow valve control signal
44 Catholyte stack inflow valve actuator
45 Anolyte stack inflow valve actuator
46 Catholyte pump
47 Anolyte pump
48 Interconnection end endplate
49 High potential end endplate
50 Stack external anolyte manifold
51 Stack external catholyte manifold
53 Stack external anolyte and oxygen manifold
54 Stack external catholyte and hydrogen manifold
56 Catholyte stack inflow valve
   56.1 Catholyte and hydrogen outflow temperature sensor
   56.2 Catholyte and hydrogen outflow temperature signal
   56.3 Catholyte and oxygen stack outflow pipe
57 Anolyte stack inflow valve
   57.1 Anolyte and oxygen outflow temperature sensor
   57.2 Anolyte and oxygen outflow temperature signal
   57.3 Anolyte and oxygen stack outflow pipe

## Claims

**1.** A method for control of the individual catholyte and anolyte flows through a multitude of electrolyser stacks (2) wherein:
a. each electrolyser stack (2) is adapted to perform electrolysation of water to produce product gasses of hydrogen and oxygen, and
b. all electrolyser stacks (2) in the multitude of electrolyser stacks (2) are served with an electric current and that,
c. all electrolyser stacks (2) are served with anolyte flow (26) from an oxygen and anolyte separator unit (16) through anolyte stack inflow pipes (26.2) by means of an anolyte pump (47)
d. all electrolyser stacks (2) are served with catholyte flow (27) from a hydrogen and catholyte separator unit (17) through catholyte stack inflow pipes (27.2) by means of a catholyte pump (46)
**characterized in that**,
e. differential pressure signals (28.1) indicative of a pressure difference between pressures in two pressure regulated inflow pipes (26.3; 27.3) at each electrolyser stack (2) is provided and
f. that catholyte stack inflow valve control signals (43) and anolyte stack inflow valve control signals (42) to each of a catholyte stack inflow valve actuator (44) and an anolyte stack inflow valve actuator (45) are provided for the regulation of each of an anolyte stack inflow valve (56) and a catholyte stack inflow valve (57).

**2.** The method according to claim 1, **characterised in that**, in an initial step, a predetermined desired differential pressure between pressures in the two pressure regulated inflow pipes (26.3; 27.3) at each electrolyser stack (2) is obtained leaving at least one of catholyte stack inflow valve (56) or anolyte stack inflow valve (57) at each electrolyser stack (2) in a fully opened state.

**2.** The method according to claim 1 or 2, **characterised in that** the catholyte pump (46) in a catholyte fluid flow circuit (16, 26, 36, 56, 2, 26.1) and the anolyte pump (47) in an anolyte fluid flow circuit (17, 27, 37, 57, 27.1) receive catholyte and anolyte fluids from the respective gas separator units (16, 17) and serves the fluids through stack external manifolds (50; 51) at the respective catholyte and anolyte stack inflow valves (56; 57) at each stack (2), and that heat exchangers (36; 37) are arranged in the fluid flow between the separator units (16, 17) and the stack external catholyte manifold (51) and stack external anolyte manifold (50), whereby further cooling flows and/or cooling flow temperatures of cooling medium supplied to the heat exchangers (36; 37) are regulated to thereby secure that none of catholyte and hydrogen outflow temperature signal (56.2) and anolyte and oxygen outflow temperature signal (57.2) from any of the electrolyser stacks (2) surpasses a predetermined outflow temperature signal during electrolysation.

**4.** The method according to claim 3, **characterised in that**, in a further step, predefined temperature signals (56.2; 57.2) from the catholyte and hydrogen outflow temperature sensor (56.1) and anolyte and oxygen outflow temperature sensor (57.1) from all of the electrolyser stacks (2) are obtained by adjusting the catholyte stack inflow valve (56) and the anolyte stack inflow valve (57) in tandem at each electrolyser stack (2).

**5.** The method according to any one of claims 1-3, **characterised in that** the electrolyte flows (26; 27) are piped into a multitude of individual electrolyser stacks (2), such as between 2 and 20 individual electrolyser stacks (2), more preferred between 4 and 12 individual electrolyser stacks (2), and most preferred to 6 individual electrolyser stacks (2).

**6.** An electrolyser system comprising a multitude of individual electrolyser stacks (2) wherein:
a. each electrolyser stack (2) is adapted to perform electrolysation of water in order to produce hydrogen and oxygen, and
b. all of the electrolyser stacks (2) in the multitude of electrolysers stacks (2) are connected to a DC electric current supply (3) and wherein
c. one anolyte and oxygen separator unit (17) and accompanying pump (47) are provided along with anolyte flows and piping (27; 27.1) connected to each electrolyser stack (2) to ensure anolyte flow from the anolyte and oxygen separator unit (17) to each electrolyser stack (2) and to ensure a combined anolyte and oxygen flow from each electrolyser stack to the oxygen separator unit, and
d. one catholyte and hydrogen separator unit (16) and accompanying pump (46) is provided along with catholyte flows and piping (26; 26.1) adapted to ensure catholyte flow from the catholyte and hydrogen separator unit (16) to each electrolyser stack (2) and adapted to ensure a combined catholyte and hydrogen flow from each electrolyser stack (2) to the catholyte and hydrogen separator unit (16), **characterised in that**,
e. differential pressure sensors (28) are provided and adapted to provide a pressure differential signal (28.1) indicative of the pressure difference between pressures in two pressure regulated inflow pipes (26.3; 27.3) at each electrolyser stack (2) and that
f. catholyte stack inflow valve control signals (43) and anolyte stack inflow valve control signals (42) to each of a catholyte stack inflow valve actuator (44) and an anolyte stack inflow valve actuator (45) are provided based on the obtained pressure differential signal (28.1) for the regulation of each of an anolyte stack inflow valve (56) and a catholyte stack inflow valve (57).

**7.** The electrolyser system according to claim 7, **characterised in that** catholyte stack inflow valve control signals (43) and anolyte stack inflow valve control signals (42) are adapted to ensure a predetermined pressure difference between the pressures in the two pressure regulated inflow pipes (26.3; 27.3) for all electrolyser stacks while leaving at least one of catholyte stack inflow valve (56) or anolyte stack inflow valve (57) at each electrolyser stack (2) in a fully opened state.

**8.** The electrolyser system according to claim 6 or 7, **characterised in that**, that heat exchangers (36; 37) are arranged in the fluid flow between the separator units (16; 17) and the stack inflow valves (56; 57), whereby further cooling flows supplied to the heat exchangers (36; 37) are adapted to be regulated to thereby secure that none of a catholyte and hydrogen outflow temperature signal (56.2) and an anolyte and oxygen outflow temperature signal (57.2) from any of the electrolyser stacks (2) surpasses a predetermined maximum outflow temperature signal during electrolysation.

**9.** The electrolyser system according to claim 8, **characterised in that** a thermosensitive element (56.1; 57.1) at each outflow pipe (56.3; 57.3) at each electrolyser stack (2) is provided and adapted to provide a catholyte and hydrogen outflow temperature signal (56.2) and an anolyte and oxygen outflow temperature signal (57.2) indicative of temperatures of the outflow material streams from each electrolyser stack (2), and at each of catholyte pressure regulated inflow pipe (26.3) and anolyte pressure regulated inflow pipe (27.3) the stack inflow valves (56, 57) are arranged and adapted to regulate the flow rate through the corresponding electrolyser stack (2), and that the inflow valves (56, 57) are adapted to be regulated to ensure predetermined temperatures of the outflow material streams from each electrolyser stack (2) during electrolysation while maintaining the predefined differential pressure signal.

**10.** The electrolyser system according to any one of the claims 6-9, **characterised in that** between 2 and 20 electrolyser stacks are provided, more preferred between 2 and 12 stacks and most preferred 6 electrolyser stacks are provided.

**11.** The electrolyser system according to any one of claims 6-10, **characterised in that**, the pump (46) in a catholyte circuit (26; 26.2; 26.1) and the pump (47) in an anolyte circuit (27; 27.2; 27.1) are each inserted in the exit line from respective separator units (16; 17) upstream of the range of electrolyser stacks (2), and that the anolyte and catholyte pumps (46, 47) are connected downstream of respective heat exchanges (36; 37) and that electrolyte outflow channels from the pumps (46; 47) are connected to anolyte and catholyte electrolyser stack inflow pipes (26.2; 27.2) respectively at each electrolyser stack (2).

**12.** The electrolyser system according to any one of claims 6-11, **characterised in that** an actuator (44; 45) is provided at each electrolyser stack inflow valve member (56,57) and adapted for control of the opening degree of respective electrolyser stack inflow valve members, and that a calculation and control unit (14) is provided and adapted to deliver catholyte electrolyser stack inflow valve control signals (42) and anolyte electrolyser stack inflow valve controls signals (43) to the actuators (44; 45) based on obtained temperature signals (56.2; 57.2) from temperature sensors (56.1; 57.1) arranged at each electrolyser stack outflow pipe (56.3; 57.3).
